# EUROPÄISCHE PATENTSCHRIFT

(11) **EP 1 028 055 B1**
(45) Veröffentlichungstag und Bekanntmachung des Hinweises auf die Patenterteilung: **27.06.2007**
(21) Anmeldenummer: 00810094.3
(22) Anmeldetag: 03.02.2000
(51) Int. Cl.: B65B 51/26, B29C 65/74, B26F 3/10

(54) **Vorrichtung zum Längsschweissen und Trennen eines Verpackungsschlauches aus einer Thermoplastfolie, insbesondere für Schlauchbeutel-Verpackungsmaschinen**
Device for longitudinal sealing and cutting of a thermoplastic packaging tube, especially for tubular bag packaging machines
Dispositif de soudage et de coupe longitudinal d'un tube en matière thermoplastique, spécialement pour machines de fabrication de sacs tubulaires

(30) Priorität: 08.02.1999 CH 23499
(43) Veröffentlichungstag der Anmeldung: 16.08.2000
(73) Patentinhaber: ROBERT BOSCH GMBH, 70442 Stuttgart (DE)
(72) Erfinder: Bausch, Günter, 78194 Immendingen (DE); Wipf, Alfred, 79798 Jestetten (DE)
(74) Vertreter: Clerc, Natalia

(56) Entgegenhaltungen:
- AT-B- 382 112
- DE-A- 2 727 960
- DE-C- 4 308 044
- FR-A- 1 383 850
- FR-A- 1 463 973
- GB-A- 1 438 628
- US-A- 2 216 108
- US-A- 2 759 524
- US-A- 2 794 485
- US-A- 2 987 107
- US-A- 3 668 965
- PATENT ABSTRACTS OF JAPAN vol. 007, no. 081 (M-205), 5. April 1983 (1983-04-05) & JP 58 007326 A (KUNIHIRO KANEMOTO), 17. Januar 1983 (1983-01-17)

## Beschreibung

Die Erfindung betrifft eine Vorrichtung zum Längsverschweissen und Trennen eines Verpackungsschlauches nach dem Oberbegriff von Anspruch 1.

Aus der CH-A-527 090 ist eine Siegel- und Trenneinrichtung für eine Schlauchbeutel-Verpackungsmaschine bekannt. Der Schlauch wird in einem Faltkasten um zwei Kolonnen von Produkten gefaltet und die beiden Längsränder werden in der Mitte zwischen den beiden Kolonnen auf die Folie mittels zweier Transport- und Siegelrollen aufgesiegelt. Stromabwärts dieser Transport- und Siegelrollen werden die beiden dadurch gebildeten parallelen Schläuche mittels eines scheibenförmigen, umlaufenden Trennmessers getrennt. Das Messer wirkt gegen einen scheibenförmigen, elastomeren Gegenhalter.

In der DE-A-2 727 960 ist eine weitere Siegel- und Trenneinrichtung beschrieben, die ein beheiztes scheibenförmiges Trennmesser enthält. Als Gegenhalter wirkt eine Platte mit einer Längsnut, in welche das Messer hineinragt. Für den Vorschub der Folie sind zusätzliche Vorschuborgane nötig.

Eine Vorrichtung der eingangsgenannten Art ist aus AT-B 382 112 bekannt.

Der vorliegenden Erfindung liegt die Aufgabe zugrunde, eine Schweiss- und Trenneinrichtung anzugeben, die eine rasche Versiegelung und Trennung bei hoher Qualität der Schweissnaht gewährleistet. Diese Aufgabe wird durch die Merkmalskombination der Ansprüche gelöst.

Nachfolgend wird ein Ausführungsbeispiel der Erfindung anhand der Zeichnungen erläutert. Darin zeigt:

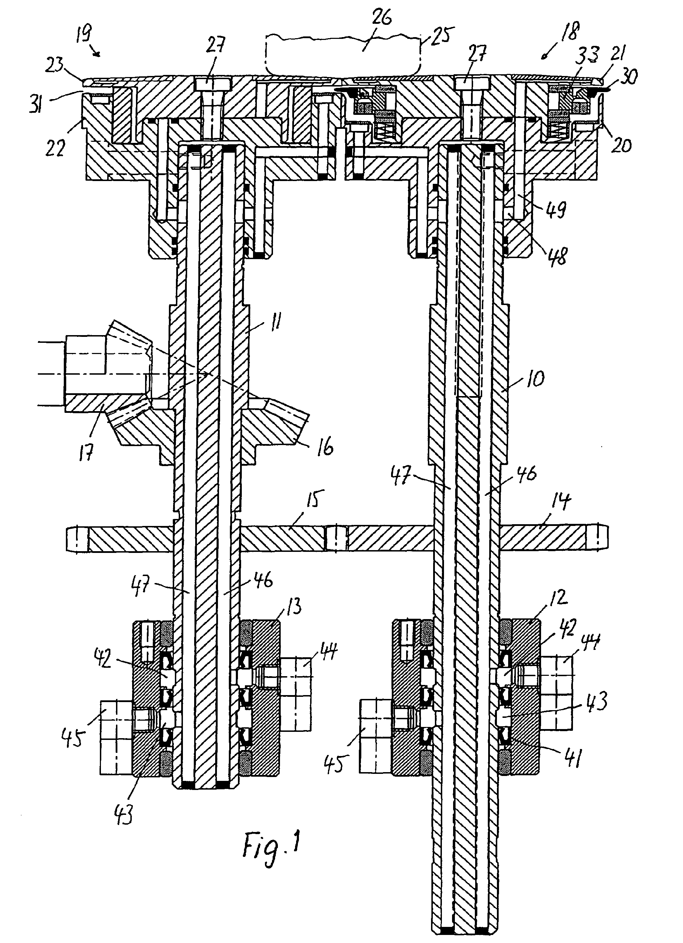

- Figur 1: einen Axialschnitt durch eine Schweiss- und Trenneinrichtung,

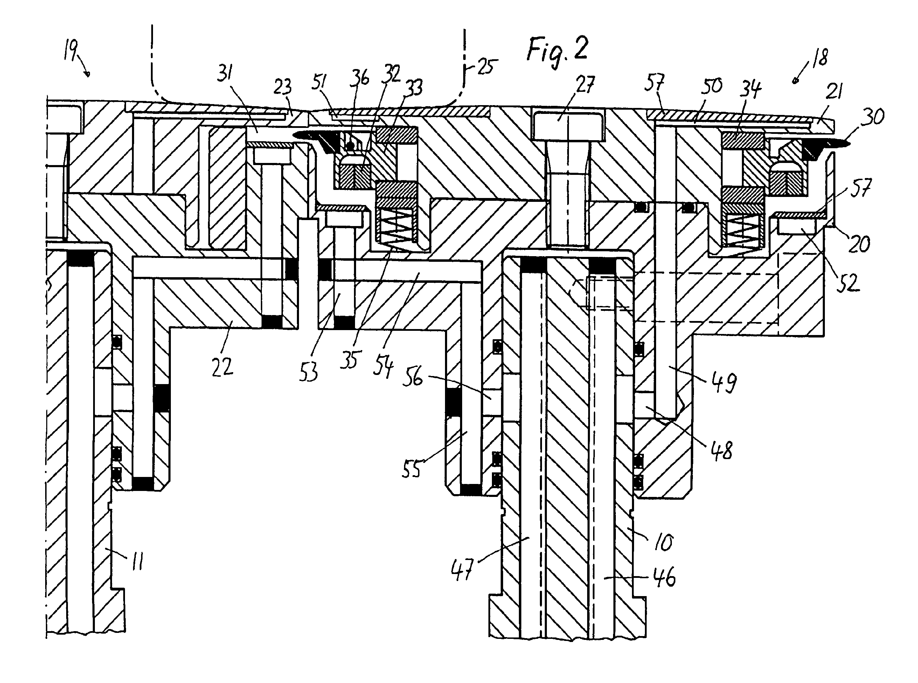

- Figur 2: einen vergrösserten Ausschnitt aus der Darstellung nach Figur 1,

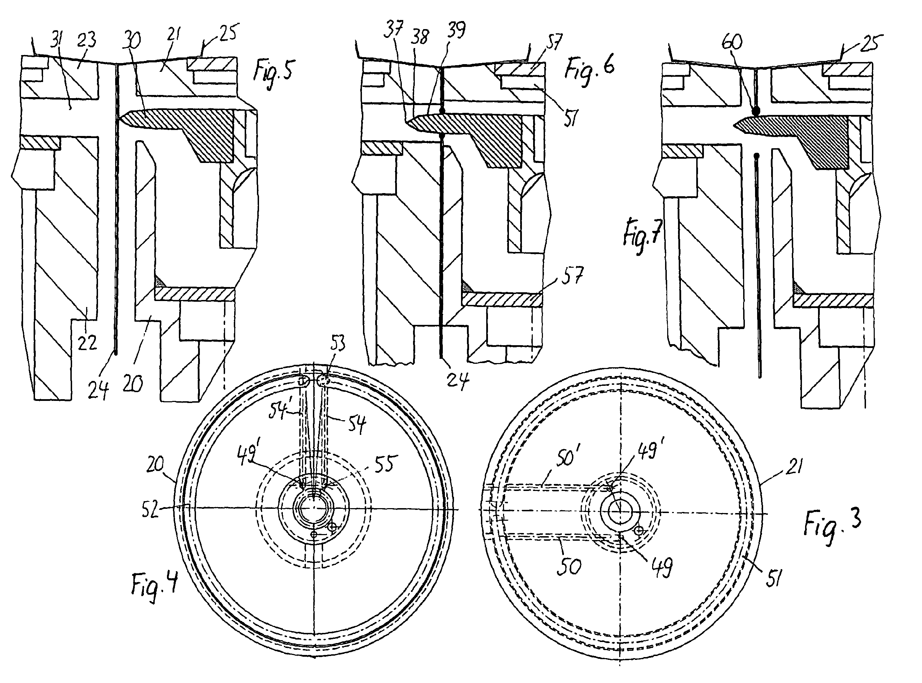

- Figuren 3 und 4: Stirnansichten der beiden Einzelrollen, und
- Figuren 5 bis 7: eine Darstellung der Funktionsweise.

Zwei achsparallele Wellen 10, 11 sind in Lagern 12, 13 drehbar gelagert und durch Zahnräder 14, 15 drehfest gegenläufig miteinander verbunden. Die Welle 11 ist durch ein Kegelradgetriebe 16, 17 mit einem nicht dargestellten Antriebsmotor verbunden. Die Wellen 10, 11 tragen oben je eine Vorschubrolle 18, 19. Die Vorschubrollen 18, 19 umfassen je zwei am Aussenumfang axial voneinander beabstandete Einzelrollen 20-23. Die Rollen 20-23 haben alle denselben Aussendurchmesser. Die Rollen 20, 22 und 21, 23 berühren sich unter Zwischenlage der beiden mit einer Trennaht zu schweissenden Folienlagen 24 des Folienschlauches 25, der die zu verpackenden Produkte 26 in regelmässigen Abständen voneinander enthält. Die Rollen 20, 21 bzw. 22, 23 sind durch je eine zentrale Schraube 27 zusammengeschraubt.

Zwischen den Rollen 20, 21 ist eine scheibenförmige Heizscheibe 30 montiert. Deren Aussendurchmesser ist grösser als der Aussendurchmesser der Rollen 20, 21. Die Heizscheibe 30 ragt in eine Umfangsnut 31 zwischen den Rollen 22, 23. Sie ist auf einem mit Heizdrähten 32 beheizten, metallenen Ring 33 montiert, der gegenüber den Rollen 20, 21 durch Isolierscheiben 34 thermisch isoliert ist. Der Ring 33 wird durch Federn 35 gegen die obere Scheibe 34 angepresst. Die Federn 35 gleichen die Wärmedehnung des Rings 33 aus. Die Temperatur der Heizscheibe 30 wird durch einen Temperaturfühler 36 gemessen und damit die Heizleistung der Heizdrähte 32 geregelt. Der Abstand zwischen der Unterseite der Rolle 21 an der Peripherie und der Abstand der Oberseite der Rolle 20 von der Radialebene durch die Schneide 37 der Heizscheibe 30 ist wesentlich grösser, vorzugsweise mindestens fünfmal so gross wie die doppelte Dicke der zu verschweissenden Folien 24. Wie aus den Figuren 5 bis 7 hervorgeht, wird die Schneide 37 durch zwei symmetrisch zu einer Radialebene angeordnete Kegelstumpfflächen 38 gebildet, die einen Öffnungswinkel von je etwa 120° aufweisen. Diese Flächen 38 gehen in zweite Kegelstumpfflächen 39 mit einem wesentlich grösseren Öffnungswinkel von etwa 158° über.

Mindestens die dem gebildeten Schlauch 25 zugewandten Einzelrollen 21, 23, im gezeigten Ausführungsbeispiel alle Rollen 20-23, sind durch ein Kühlmedium gekühlt, z.B. durch Wasser. Dazu sind die Lager 12, 13 als Kühlmittel-Kupplungen ausgebildet und haben zwei gegeneinander und gegen aussen durch Dichtringe 41 abgedichtete Umfangsnuten 42, 43. In die Nut 42 mündet ein Anschlussstutzen 44 zur Zufuhr und in die Nut 43 ein Anschlussstutzen 45 für die Abfuhr des Kühlwassers. Die Nuten 42, 43 kommunizieren mit achsialen Bohrungen 46, 47 in den Wellen 10, 11. Die Bohrung 46 der Welle 10 ist durch eine Radialbohrung 48 und eine achsparallele Bohrung 49 in den Rollen 20, 21 mit einem Radialkanal 50 verbunden, der in das eine Ende einer sich über nahezu 360° erstreckenden Umfangsnut 51 mündet. Das andere Ende dieser Nut mündet ebenfalls in einem radialen Kanal 50', der über axiale und radiale Bohrungen 49', 54' in den Rollen 20, 21 mit dem einen Ende einer weiteren Umfangsnut 52 in der Rolle 20 verbunden ist. Das andere Ende dieser Nut 52 ist wiederum über radiale und axiale Bohrungen 53 bis 56 mit der Bohrung 47 verbunden. Die Nuten 51, 52 und die Radialkanäle 50, 50' sind durch aufgeschweisste Deckel 57 abgedeckt. Das Kühlwasser fliesst also zunächst durch die Nut 51 längs der Peripherie der dem Schlauch 25 zugewandten Rolle 21, anschliessend längs der Peripherie der anderen Rolle 20. Die Kühlung der Vorschubrolle 19 erfolgt in gleicher Weise.

Die beschriebene Vorrichtung eignet sich insbesondere zum Verschweissen und Trennen von Schläuchen 25 aus Monofolien, insbesondere aus PE-Folien, sowie auch aus Coex-Folien aus LDPE/HDPE. Die Figuren 5 bis 7 zeigen Längsschnitte parallel zur gemeinsamen Ebene der Achsen der Wellen 10, 11, wobei Figur 5 einen Schnitt etwas stromaufwärts dieser Ebene, Figur 6 annähernd in dieser Ebene und Figur 7 etwas stromabwärts darstellt. Wegen des grösseren Aussendurchmessers der Heizscheibe 30 gegenüber den Rollen 12, 21 führt die Schneide 37 einen schleifenden Schnitt auf den Folien 24 aus, was das Trennen begünstigt. Die konischen Flächen 38, 39 ergeben eine gewisse Stauchung der Schweissnaht 60, so dass eine sehr gute Siegelqualität erzielt wird. Die Folie 24 wird unmittelbar benachbart der zu bildenden Trennschweissnaht beidseitig gehalten, was einen präzisen Trennschnitt ermöglicht. Durch die intensive Kühlung der Rollen 20-23, insbesondere der Rollen 21, 23, kann die Vorrichtung mit relativ hohen Drehzahlen betrieben werden, was eine hohe Produktion ermöglicht. Durch die Integration der Heizscheibe in die Transportrollen 18, 19 wird eine kompakte Bauweise ermöglicht. Die relativ schmalen Rollen 21, 23 ermöglichen es, die Schweissnaht 60 sehr nahe am Schlauch 25 zu bilden. Damit haben die fertigen Verpackungen nur wenig überstehendes Verpackungsmaterial.

## Patentansprüche

1. Vorrichtung zum Längsverschweissen und Trennen eines Verpackungsschlauches (25) aus einer Thermoplastfolie (24), insbesondere für Schlauchbeutel-Verpackungsmaschinen, umfassend eine erste Vorschubrolle (18) und eine damit zusammenwirkende zweite Vorschubrolle (19), wobei mindestens eine der Vorschubrollen angetrieben ist und sich die Vorschubrollen an ihrer Peripherie tangential berühren,
**dadurch gekennzeichnet, dass**
in der ersten Vorschubrolle (18) eine kreisförmige Heizscheibe (30) angeordnet ist, deren Durchmesser grösser als der Durchmesser der Peripherie der ersten Vorschubrolle (18) ist, und die zweite Vorschubrolle (19) eine Umfangsnut (31) aufweist, in welche die Peripherie der Heizscheibe (30) eintaucht, wobei die dem Verpackungsschlauch (25) zugewandte Oberfläche der Heizscheibe (30), ausgehend von deren Peripherie (37), eine erste Kegelstumpffläche (38) mit einem ersten Öffnungswinkel und eine an die erste Kegelstumpffläche (38) anschliessende zweite Kegelstumpffläche (39) mit einem gegenüber dem ersten Öffnungswinkel grösseren zweiten Öffnungswinkel umfasst und der Übergang von der ersten zur zweiten Kegelstumpffläche (38, 39) einen grösseren Durchmesser als der Durchmesser der Peripherie der ersten Vorschubrolle (18) hat.

2. Vorrichtung nach Anspruch 1, wobei die erste Vorschubrolle (18) aus zwei auf einer gemeinsamen Welle (10) montierten koaxialen Einzelrollen (20, 21) besteht und die Heizscheibe (30) koaxial zwischen den Einzelrollen (20, 21) angeordnet ist.

3. Vorrichtung nach Anspruch 2, wobei die Heizscheibe (30) ringförmig ausgebildet ist und mit Klemmitteln (35) an der einen Einzelrolle (21) gehalten ist.

4. Vorrichtung nach Anspruch 2 oder 3, wobei der axiale Abstand der Peripherie (37) der Heizscheibe (30) von den der Heizscheibe (30) zugewandten Stirnflächen der Einzelrollen (20-23) wesentlich grösser als die doppelte Foliendicke ist.

5. Vorrichtung nach einem der Ansprüche 2 bis 4, wobei der Öffnungswinkel der ersten Kegelstumpffläche (38) etwa 120° beträgt.

6. Vorrichtung nach Anspruch 5, wobei der Öffnungswinkel der zweiten Kegelstumpffläche (39) etwa 158° beträgt, und wobei vorzugsweise die Heizscheibe (30) im Bereich der beiden Kegelstumpfflächen (38, 39) symmetrisch zu einer die Peripherie (37) enthaltenden Radialebene ausgebildet ist.

7. Vorrichtung nach einem der Ansprüche 1 bis 6, wobei die Heizscheibe (30) gegenüber der ersten Vorschubrolle (18) wärmeisoliert ist.

8. Vorrichtung nach einem der Ansprüche 1 bis 7, wobei mindestens die erste Vorschubrolle (18) Kühlkanäle (46 bis 56) zum Anschluss an eine Kühlmittelzufuhr aufweist.

9. Vorrichtung nach Anspruch 8, wobei die Kühlkanäle Bohrungen (46, 47) in der Antriebswelle (10) der ersten Vorschubrolle (18) umfassen, die über eine Kupplung (12) an die Kühlmittelzufuhr angeschlossen sind, wobei die Antriebswelle (10) drehbar in der Kupplung (12) gelagert ist.

10. Vorrichtung nach einem der Ansprüche 1 bis 9, wobei beide Wellen der Vorschubrollen (18, 19) gegenläufig synchron angetrieben sind.

## Claims

1. Device for the longitudinal sealing and cutting of a packaging tube (25) made of a thermoplastic film (24), in particular for tubular bag packaging machines, comprising a first feed roller (18) and a second feed roller (19), interacting with the first, at least one of the feed rollers being driven and the feed rollers tangentially touching each other at their periphery,
**characterized in that**
a circular heating disc (30), the diameter of which is greater than the diameter of the periphery of the first feed roller (18), is arranged in the first feed roller (18), and the second feed roller (19) has a circumferential groove (31), which is entered by the periphery of the heating disc (30), the surface of the heating disc (30) that is facing the packaging tube (25) comprising, starting from its periphery (37), a first frustoconical surface (38) with a first included angle and, adjoining the first frustoconical surface (38), a second frustoconical surface (39) with a second included angle that is greater than the first included angle, and the transition from the first frustoconical surface (38) to the second frustoconical surface (39) having a greater diameter than the diameter of the periphery of the first feed roller (18).

2. Device according to Claim 1, the first feed roller (18) comprising two coaxial individual rollers (20, 21) mounted on a common shaft (10) and the heating disc (30) being arranged coaxially between the individual rollers (20, 21).

3. Device according to Claim 2, the heating disc (30) being of an annular form and held on one individual roller (21) by clamping means (35).

4. Device according to Claim 2 or 3, the axial distance of the periphery (37) of the heating disc (30) from the end faces of the individual rollers (20-23) that are facing the heating disc (30) being much greater than twice the film thickness.

5. Device according to one of Claims 2 to 4, the included angle of the first frustoconical surface (38) being approximately 120°.

6. Device according to Claim 5, the included angle of the second frustoconical surface (39) being approximately 158°, and the heating disc (30) preferably being formed in the region of the two frustoconical surfaces (38, 39) symmetrically in relation to a radial plane containing the periphery (37).

7. Device according to one of Claims 1 to 6, the heating disc (30) being thermally insulated with respect to the first feed roller (18).

8. Device according to one of Claims 1 to 7, at least the first feed roller (18) having cooling channels (46 to 56) for connection to a coolant supply.

9. Device according to Claim 8, the cooling channels comprising bores (46, 47) in the drive shaft (10) of the first feed roller (18), which are connected to the coolant supply via a coupling (12), the drive shaft (10) being rotatably mounted in the coupling (12).

10. Device according to one of Claims 1 to 9, the two shafts of the feed rollers (18, 19) being driven synchronously in opposite directions.

## Revendications

1. Dispositif de soudage longitudinal et de coupe d'un tube d'emballage (25) en une feuille de matière thermoplastique (24), en particulier pour des machines de fabrication d'emballages en sacs tubulaires, comprenant un premier rouleau d'avance (18) et un deuxième rouleau d'avance (19) coopérant avec celui-ci, dans lequel au moins un des rouleaux d'avance est entraîné et les rouleaux d'avance se touchent tangentiellement à leur périphérie, **caractérisé en ce qu'**il comporte, dans le premier rouleau d'avance (18), un disque chauffant circulaire (30), dont le diamètre est plus grand que le diamètre de la périphérie du premier rouleau d'avance (18), et le deuxième rouleau d'avance (19) présente une rainure périphérique (31), dans laquelle pénètre la périphérie du disque chauffant (30), dans lequel la surface du disque chauffant (30) tournée vers le tube d'emballage (25) comprend, à partir de sa périphérie (37), une première surface tronconique (38) avec un premier angle d'ouverture et une deuxième surface tronconique (39) se raccordant à la première surface tronconique (38), avec un deuxième angle d'ouverture plus grand que le premier angle d'ouverture, et le passage de la première à la deuxième surface tronconique (38, 39) présente un diamètre plus grand que le diamètre de la périphérie du premier rouleau d'avance (18).

2. Dispositif selon la revendication 1, dans lequel le premier rouleau d'avance (18) se compose de deux rouleaux individuels coaxiaux (20, 21) montés sur un arbre commun (10) et le disque chauffant (30) est disposé coaxialement entre les rouleaux individuels (20, 21).

3. Dispositif selon la revendication 2, dans lequel le disque chauffant (30) est de forme annulaire et est maintenu sur un premier rouleau individuel (21) avec des moyens de pinçage (35).

4. Dispositif selon la revendication 2 ou 3, dans lequel la distance axiale de la périphérie (37) du disque chauffant (30) aux faces frontales des rouleaux individuels (20-23) tournées vers le disque chauffant (30) est nettement supérieure au double de l'épaisseur de la feuille.

5. Dispositif selon l'une quelconque des revendications 2 à 4, dans lequel l'angle d'ouverture de la première surface tronconique (38) vaut environ 120°.

6. Dispositif selon la revendication 5, dans lequel l'angle d'ouverture de la deuxième surface tronconique (39) vaut environ 158°, et dans lequel le disque chauffant (30) est de préférence symétrique par rapport à un plan radial contenant la périphérie (37), dans la région des deux surfaces tronconiques (38, 39).

7. Dispositif selon l'une quelconque des revendications 1 à 6, dans lequel le disque chauffant (30) est isolé thermiquement par rapport au premier rouleau d'avance (18).

8. Dispositif selon l'une quelconque des revendications 1 à 7, dans lequel au moins le premier rouleau d'avance (18) présente des canaux de refroidissement (46 à 56) à raccorder à une arrivée d'agent de refroidissement.

9. Dispositif selon la revendication 8, dans lequel les canaux de refroidissement comportent des perçages (46, 47) dans l'arbre d'entraînement (10) du premier rouleau d'avance (18), qui sont raccordés à l'arrivée d'agent de refroidissement par un raccord (12), dans lequel l'arbre d'entraînement (10) est monté à rotation dans le raccord (12).

10. Dispositif selon l'une quelconque des revendications 1 à 9, dans lequel les deux arbres des rouleaux d'avance (18, 19) sont entraînés en synchronisme en sens contraire.
